# EUROPEAN PATENT APPLICATION

(11) **EP 2 769 756 A1**
(43) Date of publication of application: **27.08.2014**
(21) Application number: 14150505.7
(22) Date of filing: 08.01.2014
(51) Int. Cl.: A63F 13/30

(54) **Game system, control method, program and storage medium**

(30) Priority: 20.02.2013 JP 2013031411
(71) Applicant: Square Enix Co., Ltd., Tokyo 160-8430 (JP)
(72) Inventor: Morimoto, Hiroki, Tokyo, Tokyo 160-8430 (JP); Shigekuni, Kazuhiro, Tokyo, Tokyo 160-8430 (JP)
(74) Representative: Pitchford, James Edward

(57) **Abstract**

A game system transmits, in real-time, a game screen operated by at least one operating user so that a viewing user, different to the at least one operating user, can view the game screen. The game system acquires and analyzes an evaluation by a viewing user for progress of the game, and controls execution of game processing so as to cause to be different the progress of the game in accordance with the analysis result.

## Description

### BACKGROUND OF THE INVENTION

### Field of the Invention

The present invention relates to a game system, a control method, a program and a storage medium, and particularly to a game system in which progress changes in accordance with an evaluation performed by another user.

### Description of the Related Art

In recent years, amongst moving image posting sites, there are those in which for a posted moving image a viewing user comment, for which a playback timing in the moving image can be specified, can be posted (Japanese Patent Laid-Open No. 2007-274090). Posted comments are superimposed on the moving image when a frame at the specified playback timing is played back, and presented to other viewing users as well as the posting user. In this way, regarding comments superimposed on the moving image, because a comment having desired content can be displayed at a desired timing to another user viewing the moving image, these sites are increasingly established a new position as a communication tool for communication with other users.

For example, in such moving image posting sites, in recent years, posting of moving images capturing screens when users actually play a game (gameplay moving image) is performed. For such gameplay moving images, by posting comments in accordance with gameplay conditions, a viewing user can exchange comments about identical gameplay conditions with another user after posting. Here, even if the posting timings of comments of the users differ, the posting user can have an experience as though he was exchanging comments with other users at the same time while viewing the same gameplay conditions.

However, viewing user comments in the above described moving image posting sites do not have any influence on a game that a user operates in the gameplay moving image. In other words, an "evaluation" that a viewing user made as a comment with respect to a gameplay moving image was an evaluation that was performed after the fact, and had no influence on the user playing the game for the moving image.

In contrast to this, there are systems arranged for streaming distribution (live broadcast) of moving images in real-time in moving image posting sites. A viewing user (a viewer) of a live broadcast can present a comment in real-time to a broadcast owner user (in other words to a user operating the game). In other words, in a live broadcast, the broadcast owner user can play the game while confirming in real-time comments from viewing users.

However, comments made during a live broadcast are presented to a broadcast owner user in real-time, but the target that the comments influence is the broadcast owner user. In other words, even for a live broadcast, the details of the game that the broadcast owner user plays is no different from normal, and this is not something that adds elements to the game that provide interest to the broadcast owner user playing the game.

On the other hand, as in Japanese Patent Laid-Open No. 2002-099867, there are systems in which actions that a plurality of users take for an event influence the progress of a scenario. However, in content provision of this kind of form, one cannot know what actions another user took when an event occurs. In other words, elements allowing communication between users, that can be seen in moving image posting sites as described above, have not existed in systems such as that described in Japanese Patent Laid-Open No. 2002-099867.

### SUMMARY OF THE INVENTION

The present invention was made in view of such problems in the conventional technique. The present invention provides a game system, a control method, a program and a storage medium for providing a game having added value for the operating user of the game.

The present invention in its first aspect provides a game system as specified in claims 1 to 7.

The present invention in its second aspect provides a method for controlling a game system as specified in claim 8.

The present invention in its third aspect provides a game system as specified in claim 9.

The present invention in its fourth aspect provides a program as specified in claim 10.

The present invention in its fifth aspect provides a computer-readable storage medium as specified in claim 11.

Further features of the present invention will become apparent from the following description of exemplary embodiments (with reference to the attached drawings).

### BRIEF DESCRIPTION OF THE DRAWINGS

Figure 1 is a view showing a system configuration of a game system according to an embodiment of the present invention.
Figure 2 is a block diagram showing a functional configuration of a game server 100 according to the embodiment of the present invention.
Figure 3 is a block diagram showing a functional configuration of a PC 200 according to the embodiment of the present invention.
Figure 4 is a flowchart showing game processing executed on the PC 200 according to the embodiment of the present invention.
Figure 5A to Figure 5C are views showing an example of a screen configuration displayed on a viewing PC and an operation PC according to the embodiment of the present invention.

### DESCRIPTION OF THE EMBODIMENTS

### Embodiment

Below, detailed explanation for the explanatory embodiment of the present invention will be given with reference to the drawings. Note, in the embodiment explained below, an example will be explained in which a game system, comprised of PCs used by an operating user that operates a game, and by each viewing user that views game screens being operated by the operating user, and a game server that provides game content via a network to these PCs, is applied to the present invention. However, implementation of the present invention is not limited to this, and adoption to a device capable of transmitting in real-time so that a viewing user different to the operating user can view game screens according to the game that the operating user operates is possible.

### <system configuration of the game system>

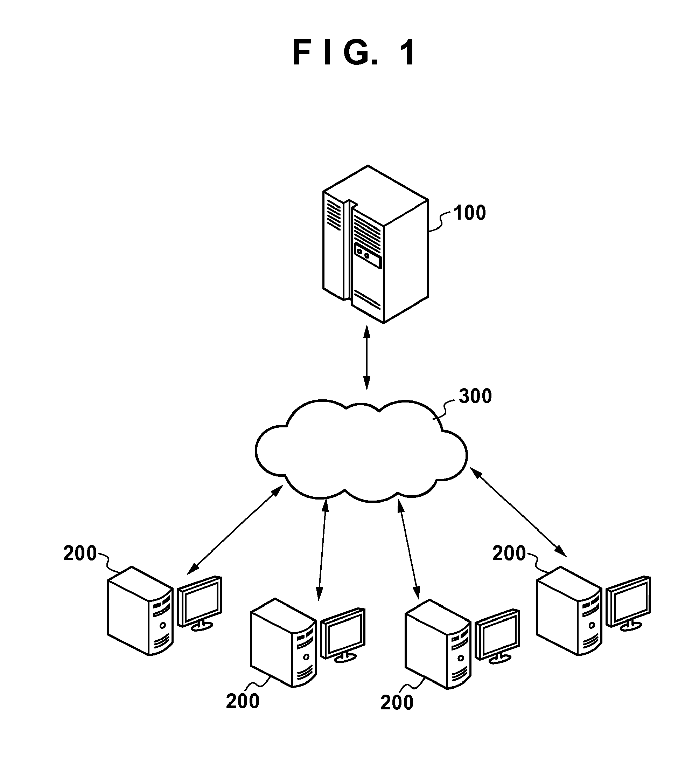

Figure 1 is a diagram for showing the system configuration of the game system according to the embodiment.

A game server 100 and PCs 200 that users use are connected via a network 300. In the embodiment, the game server 100 transmits game screens generated by game processing executed on the server to the PC 200 that the operating user uses. Also, the PC 200 transmits operation input for the game performed by the operating user to the game server 100, and the game server 100 reflects the operation input in the game processing, and generates game screens in accordance with the operation input. By doing this, the operating user can play game content that the game server 100 provides via the network 300 similarly to when playing on a standard home-use video game console.

Also, in the embodiment, the game screens generated in accordance with the operation input performed by the operating user are also simultaneously transmitted to the PCs 200 that the viewing users are using. In other words, the viewing users can view (appreciate) the game being played by the operating user in real-time. The game server 100 does not receive the operation input for the game from the PCs 200 that the viewing users use, but does receive evaluations regarding game play such as comments input by the viewing users.

Note, in the embodiment, in order to simplify explanation, explanation is given having game content that the game server 100 provides be game content for which operation by only one operating user is possible, but implementation of the present invention is not limited to this. For example, the game content may be such that a plurality of operating users can simultaneously perform operations, and may be such that a plurality of users are assigned, in an order, to be the operating user.

Also, in the embodiment, explanation is given having the game server 100 generate game screens according to the game content and provide the screens to the PCs via the network as an embodiment of the game system, but implementation of the present invention is not limited to this. For example, the game system may have a configuration in which the game screens generated on any client device such as a PC or a game device is shared with other client devices without going through the game server 100. Alternatively, the PC 200 that the operating user uses, for example, may have a configuration in which it receives data of the game content from the game server 100, generates a game screen, and transmits the game screen to the PCs 200 that the viewing users use via the game server 100 or directly. Also, regarding communication method, a method in which communication is performed by direct wired connections between devices and not through the network 300 may be used.

### <functional configuration of the game server 100>

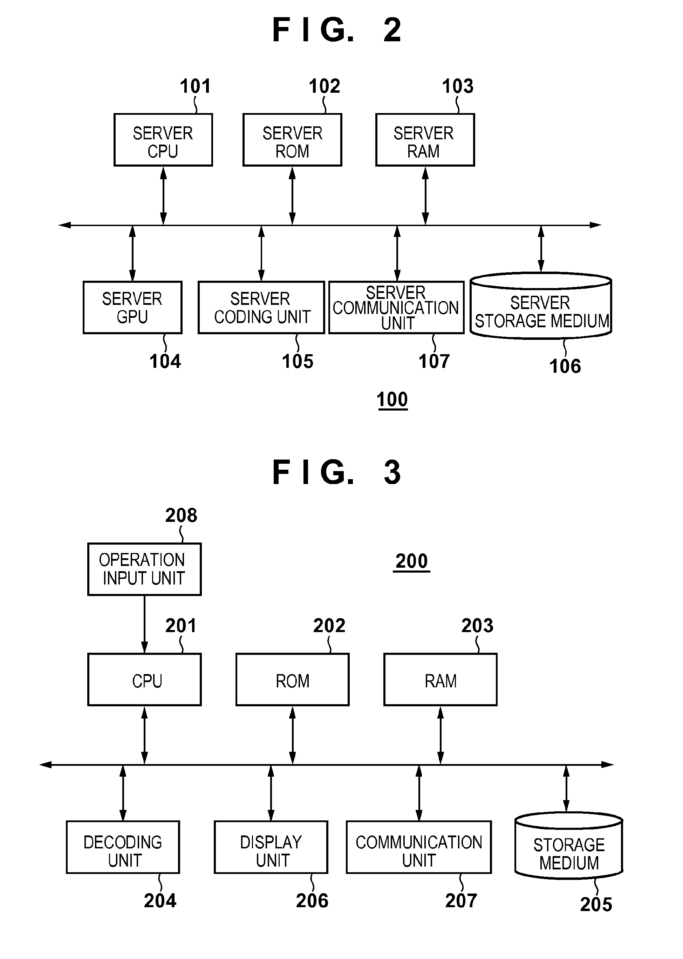

Here, detailed explanation for a functional configuration of the game server 100 according to the embodiment will be give using a block diagram of Figure 2. Note, in the explanation of the embodiment, in order to distinguish the configuration of the game server 100 from the configuration of the PCs 200, explanation will be given adding the prefix "server".

A server CPU 101 controls operation of each block of the game server 100. Specifically, the server CPU 101 controls operation of the blocks by reading out operation programs of the blocks, which are stored in a server ROM 102 or in a server storage medium 106, loading them into a server RAM 103, and executing them.

The server ROM 102 is a rewritable non-volatile memory, for example, and in addition to operation programs of the blocks of the game server 100, it stores parameters, and the like, which are necessary for operation of the blocks. Also, the server RAM 103 is a volatile memory, and as well as being a loading area of operation programs of the blocks, it is also used as a storage area for storing intermediate data output in operation of the blocks.

A server GPU 104 generates game screens for the game content that the game server 100 provides. Specifically, the server GPU 104 reads out GUI data, texture data or model data of a rendering object stored in the server storage medium 106 and loads it into a GPU memory (not shown). Then, the server GPU 104 applies appropriate processing to the loaded data in accordance with camera parameters, parameters in the game, and the like, and renders a game screen on VRAM (not shown).

In the game server 100 of the embodiment, game screens generated by the server GPU 104 are transmitted to the PCs 200 as coded moving image data in order to reduce an information transfer amount. Generation of the coded moving image data is performed by a server coding unit 105. Specifically, the server coding unit 105 generates coded moving image data by executing predetermined processing such as intra-frame coding or inter-frame coding, referring to a plurality of game screens corresponding to consecutive frames generated by the server GPU 104, for example.

The server storage medium 106 is a storage apparatus detachably connected to the game server 100 such as an HDD, for example. In the server storage medium 106, various information necessary for the game content provision services, and not only data of operation programs of the blocks of the above described game server 100 and rendering objects, and GUI data, are recorded.

A server communication unit 107 is a communication interface of the game server 100. The server communication unit 107 performs data transmission and receiving via the network 300 with the PCs 200 in accordance with a predetermined protocol. In the embodiment, the server communication unit 107 transmits coded moving image data for game screens and receives operation input for the game and evaluation information for game play.

### <configuration of the PCs 200>

Next, functional configuration of the PCs 200 of the embodiment will be explained using the block diagram of Figure 3.

A CPU 201 controls operation of the blocks of the PCs 200. Specifically, the CPU 201 reads out operation programs of the blocks recorded in a ROM 202 or in a storage medium 205. The CPU 201 controls operation of the blocks by loading the read out operation programs into a RAM 203 and executing them.

The ROM 202 is a rewritable, non-volatile memory, for example. The ROM 202 stores operation programs of the blocks of the PCs 200 and parameters necessary for the operation of the blocks. Also, the RAM 203 is a volatile memory. Also, the RAM 203, as well as being a loading area of operation programs of the blocks, is also used as a storage area for storing intermediate data output in operation of the blocks. In the PCs 200 of the embodiment, coded moving image data for game screens transmitted from the game server 100 is stored in the RAM 203 after being received via a communication unit 207.

The communication unit 207 is a communication interface of the PCs 200. The communication unit 207 performs transmission of data to, and receipt of data from, the game server 100 via the network 300 in accordance with a predetermined protocol.

A decoding unit 204 generates a game screen of each frame by decoding the coded moving image data received from the game server 100. The game screens generated by the decoding unit 204 are transferred to a display unit 206, and presented to a user of a PC 200. The display unit 206 is a display apparatus such as an LCD, for example. The display unit 206 may be built in to the PCs 200, or may have a configuration in which it is connected detachably to the PCs 200.

The storage medium 205 is a storage apparatus which is detachably mounted to the PCs 200, such as an HDD, for example. In the embodiment, at least a program for a Web browsing application (hereinafter referred to simply as a browser) is stored in the storage medium 205. A user activates the browser and connects to the game server 100 in a case where he or she wishes to use game content services that the game server 100 provides.

An operation input unit 208 is a user interface of the PCs 200 such as a game pad, a mouse or a keyboard. The operation input unit 208 analyzes operation input performed on a corresponding device by a user, and transfers control signals corresponding to the operation input to the CPU 201.

### <the game processing>

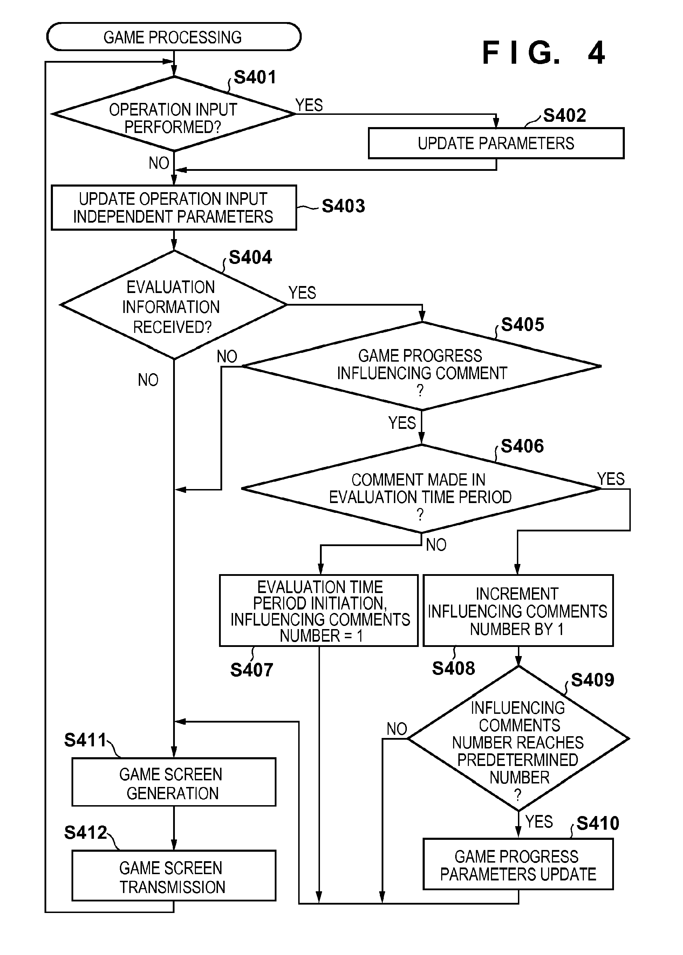

For game processing for generating and providing the game screens for the game content executed in the game server 100 of the embodiment having this kind of a configuration, explanation of specific processing will be given using the flowchart of Figure 4. The processing corresponding to the flowchart can be realized by the server CPU 101 reading out a corresponding processing program stored in the server ROM 102, for example, loading it into the server RAM 103, and executing it. Note, for the game processing, explanation is given having it be something that is initiated when, for example, a usage request of the game content is received from the PC 200 that the operating user uses (the operation PC).

In step S401, the server CPU 101 determines whether or not operation input for the game was performed on the operation PC. Specifically, the server CPU 101 performs a determination based on whether or not the server communication unit 107 received information indicating the operation input performed on the operation PC. The server CPU 101 moves the processing to step S402 in a case where it determines that operation input for the game was performed, and it moves the processing to step S403 in a case where it determines that operation input for the game was not performed.

In step S402, the server CPU 101 updates various parameters for the game in accordance with the received information indicating the operation input, and moves the processing to step S403. Also, in step S403, the server CPU 101 updates various parameters for the game that change independently of the operation input. Note, the various parameters for the game are stored and managed in the server RAM 103, for example.

In step S404, the server CPU 101 determines whether or not evaluation information for game play was received from a PC 200 (the browsing PC) that a viewing user uses of a game screen of the game that the operating user plays.

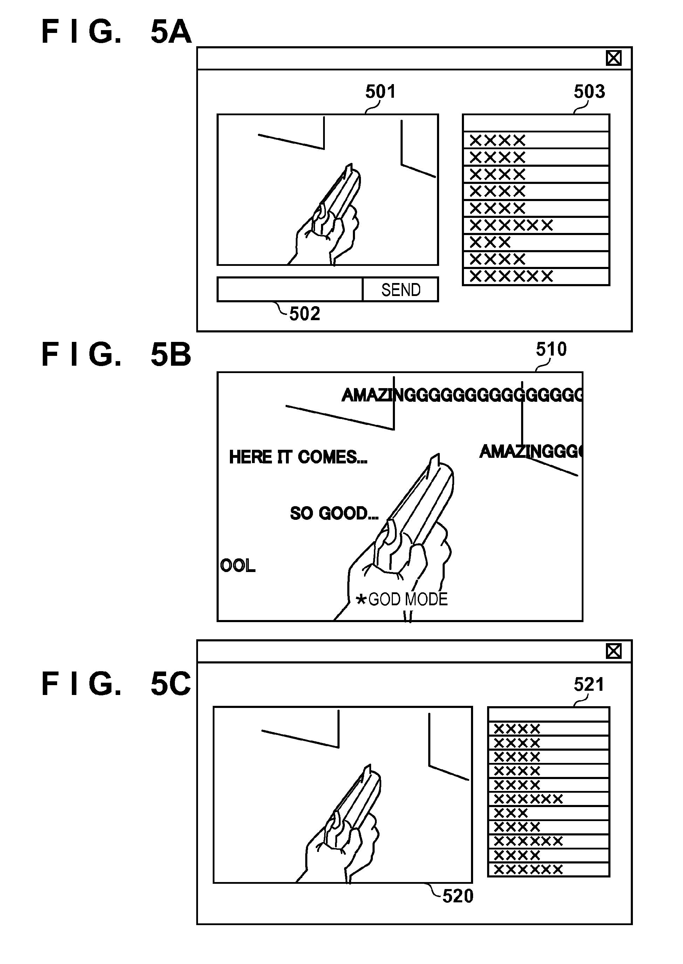

In the game system of the embodiment, the viewing user is able to view, in real-time, game screens of the game being played by the operating user by connecting to the game server 100 using the browser in the PC 200 that he or she is using. Also, the viewing user can transmit comments, as evaluation information, that evaluate game play by the operating user while viewing the game screens. For example, the screens provided via the browser for the viewing user may be as in Figure 5A. As shown in Figure 5A, in the screen, in addition to a screen display unit 501 to which the game screen is displayed, a comment transmission unit 502 for comment transmission, and a comment display unit 503, which displays comments transmitted by the viewing users currently viewing, are included. In the game server 100 of the embodiment, communication between the viewing users can be made possible via the game by transmission of comments and provision of a displaying function to the viewing users in this way.

Note, in the game system of the embodiment, the server CPU 101 changes game progress in accordance with evaluation information for evaluation performed by the viewing user, as is explained later. For this reason, the evaluation information may be displayed on the screen provided via the browser on the operation PC so that changes can be predicted or understood. Display of the evaluation information on the operation PC may include the comment being superimposed within a game screen 510, displayed maximized as in Figure 5B, for example, or may take a form in which a comment display unit 521 is provided separately from a game screen display unit 520 so not to obstruct visibility of the game screen of the operating user as in Figure 5C.

Also, in the embodiment, for simplicity, explanation is given having the evaluation information transmitted by the viewing PC be a comment that evaluates game play, but the transmitted evaluation information is not limited to this. For example, the browsing PC may be able to transmit comments that are unrelated to those that evaluate game play, and may be of a format whereby pre-registered comments can be selected and transmitted.

Also, the transmitted evaluation information does not need to have text data created by a user as with a comment. The evaluation information may be information by which the existence or absence of an evaluation is determined by whether or not something like, for example, "Like!" is selected. Also, the evaluation information may be information for determining the existence or absence of an evaluation by information as to whether or not a command input such as a combination of specific buttons was performed.

The server CPU 101 moves the processing to step S405 in a case where it determines that evaluation information for game play is received, and moves the processing to step S411 in a case where it determines that the evaluation information is not received.

In step S405, the server CPU 101 analyzes the content of the comment of the received evaluation information, and determines whether or not the comment is a comment determined to influence the game progress. The analysis of the comment may be determined by whether or not a predetermined key word is included, for example. In the embodiment, for simplicity, when a comment having affirmative content is made for gameplay, i.e. operations of the operating user, the viewing user is assumed to influence the game progress of the game that the operating user plays. However, the analysis of the evaluation information in this step is not limited to this, and may analyze whether or not negative content is an evaluation that matches a specific condition, for example. The server CPU 101 moves the processing to step S406 in a case where it determines that the received comment of the evaluation information is a comment that influences the game progress, and moves the processing to step S411 in a case where it determines that the comment does not influence the game progress.

In step S406, the server CPU 101 determines whether or not the timing at which the comment (evaluation) that influences the game progress was made, is included in an evaluation time period. In the embodiment, explanation is given having the evaluation time period be a predetermined time period that is initiated when an evaluation for operation of the operating user having affirmative content is performed in a state in which the evaluation time period is not set, for example. However, the evaluation time period in the embodiments of the present invention is not limited to this, and may be determined beforehand in the game progress, or the initiation or the length may be specifiable by the operating user. The server CPU 101 moves the processing to step S408 in a case where it determines that the timing at which the evaluation is performed is included in the evaluation time period. Also, the server CPU 101 moves the processing to step S407 in a case where it determines that the timing at which the evaluation is performed is not included in the evaluation time period, i.e. it is determined that the evaluation is performed in a state in which the evaluation time period is not set.

In step S407, the server CPU 101 sets the evaluation time period and initiates the measurement of the time period. Also, the server CPU 101 sets the number of comments made that influence the game progress to 1, stores that in the server RAM 103, and moves the processing to step S411.

On the other hand, in a case where it determines that the timing at which the evaluation is performed is included in the evaluation time period in step S406, the server CPU 101, in step S408, updates the number stored in the server RAM 103 of comments made that influence the game progress, increasing it by 1.

In step S409, the server CPU 101 determines whether or not the number of comments made that influence the game progress reaches a predetermined number. The server CPU 101 moves the processing to step S410 in a case where it determines the number of comments made that influence the game progress reaches the predetermined number, and moves the processing to step S411 in a case where it determines that the predetermined number is not reached.

In step S410, the server CPU 101 changes parameters of the game progress. The parameters of the game progress, may be things that change a dramatic effect such as an effect that is applied for a game screen, for example, or they may be things that change a difficulty level of the game, or that make a so-called back route playable. Alternatively, in a case where the game is such that the operating user can select a divergence, divergence may be automatically selected due to parameter change. Change in the progress may be performed in accordance with a game design such as a change to a more flashy dramatic effect, for example, or the difficulty level rising, in a case where an affirmative evaluation influences the game progress as in the embodiment.

In step S411, the server GPU 104, under the control of the server CPU 101, generates a game screen in accordance with various parameters.

In step S412, the server CPU 101 causes the server coding unit 105 to code the generated game screen, transmits the obtained coded moving image data to the operation PC that the operating user uses, and to the browsing PC that the connected the viewing user uses, and returns the processing to step S401.

By doing this, the viewing user can change parameters of the game progress when the number of affirmative comments made by the viewing user reaches the predetermined number in the game system of the embodiment. Note, in the embodiment, explanation was given having the game progress be influenced in a case in which a predetermined number of affirmative comments exist, but the number of comments may be 1, or the game progress may be influenced without having an evaluation time period. Also, detailed explanation was not made in the embodiment, but comments from the same viewing user having the same analysis result may be removed from the tally in the evaluation time period.

Also, a game system as in the embodiment in which the game progress is influenced, is ideal for being applied to a game genres in which a so-called real-time nature is required wherein operation and game progress are related such as in so-called action games, rhythm games, Tetris type games, and the like. In other words, it is thought that a game in which, in response to an evaluation made by a viewing user, the game progress changes in real-time, and an operating user plays correspondingly, is able to allow communication between users and ideally maintain both users interest. However, it goes without saying that the invention is not limited to being applied to these game genres.

Also, in the embodiment, explanation was given having a dramatic effect or a difficulty level change in accordance with evaluations by the viewing users, but the way by which viewing users influence the game progress is not limited to this. For example, scenes in the game may be formed wherein the comments made by the viewing users are commands, the format of a comment capable of influencing the game directly being prepared as an input format of the comments. Specifically, they may be something that changes light source settings, for example, or they may be something that arranges a specific obstacle in the scene.

As explained above, the game system of the embodiment can provide a game having added value for an operating user of the game while allowing communication between users. Specifically, the game system transmits in real-time game screens operated by the at least one operating user so that at least one viewing user different from the operating user can view them. The game system acquires and analyzes evaluations made by the viewing users for progress of the game, and controls the executing game processing so as to cause to be different the progress of the game in accordance with the analysis result.

### Other Embodiments

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. Also, the game system according to the present invention can be realized by a program that causes one or more computer to function as the game system. This program can be recorded in a computer readable storage medium, and can be provided/distributed via an electrical communication line.

## Claims

1. A game system for transmitting, in real-time, a game screen operated by at least one operating user so that a viewing user, different to the at least one operating user, can view the game screen, comprising:
execution means (101) for executing processing of a game of the game screen;
analysis means (101) for acquiring and analyzing an evaluation by a viewing user for progress of the game; and
control means (101) for controlling said execution means so as to cause to be different progress of the game in accordance with an analysis result of the evaluation by the viewing user by said analysis means.

2. The game system according to claim 1, wherein:
said analysis means analyzes a number of evaluations that match a condition set beforehand out of evaluations by the viewing user, and
said control means controls, in a case where the number of evaluations that match the condition set beforehand is not less than a threshold, said execution means so that progress of the game is made different for content corresponding to the condition.

3. The game system according to claim 1 or 2, wherein
the evaluation by the viewing user is acquired as text data, and
said analysis means analyzes whether or not a predetermined key word that indicates an affirmative evaluation for an operation of the at least one operating user is included in text data acquired as an evaluation by the viewing user.

4. The game system according to any one of claims 1-3, wherein
said execution means includes determination means for determining a dramatic effect to be applied for the game screen, and
said control means, in accordance with a result of the analysis of the evaluation by the viewing user, causes to be different the dramatic effect determined by said determination means.

5. The game system according to any one of claims 1-4, wherein
said execution means include changing means for changing a difficulty level of the game, and
said control means controls, in accordance with a result of the analysis of the evaluation by the viewing user, said changing means in order to change a difficulty level of the game.

6. The game system according to any one of claims 1-5, wherein said analysis means makes an evaluation, made by the viewing user within a predetermined time period from a predetermined evaluation by the viewing user, to be an analysis target.

7. The game system according to any one of claims 1-6, further comprising presentation means (206) for presenting an acquired evaluation by the viewing user to the at least one operating user or the viewing user along with the game screen.

8. A method of controlling a game system for transmitting, in real-time, a game screen operated by at least one operating user so that a viewing user, different to the at least one operating user, can view the game screen, the method comprising:
an execution step (S401-S404, S411, S412) of executing processing of a game of the game screen;
an analysis step (S405-S409) of acquiring and analyzing an evaluation by a viewing user for progress of the game; and
a control step (S410) for controlling operation in the execution step so as to cause to be different progress of the game in accordance with a result of the analysis of the evaluation by the viewing user in the analysis step.

9. A game system for transmitting, in real-time, a game screen operated by at least one operating user so that a viewing user, different to the at least one operating user, can view the game screen, wherein:
in a display apparatus configured to display the game screen transmitted by the game system,
screen display means (501, 510, 520) on which a game screen is displayed, and
evaluation display means (503, 510, 521) for displaying an evaluation made by the viewing user made for progress of a game of the game screen,
are included as a display interface, and
the game screen displayed on the screen display unit is displayed, with the progress of the game being different, in accordance with the analysis result of the evaluation made by the viewing user.

10. A program for causing one or more computers to function as each means of the game system according to any one of claims 1-7.

11. A computer-readable storage medium that records a program for causing one or more computers to function as each means of the game system according to any one of claims 1-7.
